# EUROPÄISCHE PATENTANMELDUNG

(11) **EP 1 278 339 A1**
(43) Veröffentlichungstag der Anmeldung: **22.01.2003**
(21) Anmeldenummer: 01116763.2
(22) Anmeldetag: 20.07.2001
(51) Int. Cl.: H04L 12/56, H04L 12/08

(54) **Verfahren und Anordnung zur Übermittlung von Daten aus einem ersten Datennetz in ein zweites Datennetz**

(71) Anmelder: SIEMENS AKTIENGESELLSCHAFT, 80333 München (DE)
(72) Erfinder: Fally, Gerhard, 1140 Wien (AT); Jurkovics, Richard, 2801 Katzelsdorf (AT); Morelj, Robert, 91539 München (DE)
(74) Vertreter: Peham, Alois, Dipl.-Ing.

(57) **Zusammenfassung**

Es wird ein Verfahren und eine Anordnung zur Übermittlung von Datenpaketen, welche neben der Nutzinformation (PL) eine Information über ihre zeitliche Reihenfolge umfassen, aus einem ersten Datennetz in ein zweites Datennetz angegeben. Das Auslesen der zwischengespeicherten Daten wird dabei an einer vorgebbaren, von der durch die Speicherung von Datenpaketen resultierende Speichersegmentierung unabhängigen Stelle der Speichereinrichtung gestartet. Die Erfindung eignet sich deswegen insbesondere auch für die effiziente Übermittlung von RTP-Datenpaketen.

## Beschreibung

Es wird ein Verfahren zur Übermittlung von Daten aus einem ersten Datennetz in ein zweites Datennetz angegeben, wobei
- die Daten im ersten Datennetz in Pakete gegliedert sind,
- jedes Datenpaket neben den Nutzdaten eine Information über die im zweiten Datennetz vorgesehene zeitliche Reihenfolge umfasst, insbesondere einen Zeitstempel und/oder eine laufende Nummer und
- die Datenpakete in einer Speichereinrichtung entsprechend dieser zeitlichen Reihenfolge zwischengespeichert werden.
Weiterhin wird eine Anordnung zur Durchführung des Verfahrens angegeben.

Nach dem Stand der Technik werden Daten in Datennetzen häufig paketweise übermittelt. Aufgrund der vorhandenen Standards zur Datenübermittlung ist dabei weder eine kontinuierliche Übermittlung der Datenpakete, noch eine Übermittlung der Datenpakete in der richtigen zeitlichen Reihenfolge zwingend gegeben.

Um die richtige zeitliche Reihenfolge der Datenpakete beim Empfänger jedoch wieder herstellen zu können, beinhalten die Datenpakte neben der Nutzinformation beispielsweise einen Zeitstempel, der in der Regel den Zeitpunkt des Entstehens der Daten angibt. Zusätzlich kann auch eine laufende Nummer im Datenpaket übertragen werden, welche ein zweites Kriterium zur Sortierung darstellt.

Die richtige zeitliche Reihenfolge ist insbesondere bei Sprach-, Video- und Audiodaten wichtig, weswegen hier eine entsprechende Reihung beim Empfänger nötig ist, sofern die Übertragung mit Hilfe von Datenpaketen erfolgt. Idealerweise steht als Ergebnis beim Empfänger ein kontinuierlicher Datenstrom zur Verfügung. Die Sprach-, Audio- oder Videodaten können so ohne wesentliche Störungen wiedergegeben werden.

Stellvertretend für die vielen existierenden Standards wird die Übertragung gemäß dem "Real Time Transport Protocol", kurz RTP, angegeben, welches von der "Internet Engineering Task Force", kurz IETF, spezifiziert wurde. Die Beschreibung des Standards ist in "IETF RFC 1889: RTP: A Transport Protocol for Real Time Applications" enthalten.

Bestandteil eines RTP-Pakets ist neben einem Zeitstempel und einer fortlaufenden Nummerierung auch eine Information über den Typ der Nutzdaten, auch bekannt unter dem Begriff "Payload Type". Beispiele für die Nutzdaten sind Daten nach dem Standard " ITU G.711: Pulse code modulation (PCM) of voice frequencies", "ITU G.723.1: Dual rate speech coder for multimedia communications transmitting at 5.3 and 6.3 kbit/s" und "ITU G.723.1 Annex A: Silence compression scheme".

Das diskontinuierliche und ungeordnete Eintreffen der Datenpakete führt also bei der Datenübermittlung zwischen zwei verschiedenen Datennetzen zu Schwierigkeiten, da aus den einzelnen Paketen ein kontinuierlicher und geordneter Datenstrom erzeugt werden muss.

Aufgabe der Erfindung ist es daher, ein Verfahren und eine Anordnung anzugeben, welche die Übermittlung von Daten aus einem ersten Datennetz in ein zweites Datennetz in besonders effizienter Weise ermöglicht.

Die Aufgabe der Erfindung wird gelöst durch ein Verfahren der eingangs genannten Art, bei dem das Auslesen der zwischengespeicherten Daten an einer vorgebbaren, von der durch die Speicherung von Datenpaketen resultierende Speichersegmentierung unabhängigen Stelle der Speichereinrichtung gestartet wird.

Die Speichereinrichtung wird also hinsichtlich des Speichervorganges als segmentierter, hinsichtlich des Auslesevorgangs im wesentlichen als unsegmentierter Speicher aufgefasst. Da die Daten im Zwischenspeicher mit einem unterschiedlichem Zeitrang behaftet sind und mit Hilfe des erfindungsgemäßen Verfahrens das Auslesen der zwischengespeicherten Daten an einer beliebigen Stelle der Speichereinrichtung gestartet werden kann, ist die Ausgabe von Daten mit beliebigen Zeitrang zu einem beliebigen Zeitpunkt möglich. Die kleinste Zeiteinheit ist dabei die Dauer eines Samples. Je nach zeitlicher Auflösung der in den Paketen übermittelten Daten ist daher ein mehr oder weniger zeitlich quasikontinuierlicher Zugriff möglich.

Je nach verwendetem Standard entsprechen die Daten im Zwischenspeicher dabei beispielsweise direkt den aus dem ersten Netz erhaltenen Daten, oder werden etwa mit Hilfe der aus dem ersten Netz erhaltenen Daten synthetisch erzeugt.

Die Erfindung bezieht sich nicht nur auf Datennetze im engeren Sinn, sondern im speziellen auch auf einzelne Datenleitungen, also der einfachsten Form eines Datennetzes.

Generell gilt für das erfindungsgemäße Verfahren, dass neben einer Sortierung durch Belegung aufeinander folgender Speicherbereiche auch eine Sortierung mittels Zeigertechnik denkbar ist. Bei letzterer Variante wird im Hinblick auf einen schnellen Speichervorgang auf das Erfordernis der Belegung aufeinander folgender Speicherbereiche verzichtet. Stattdessen wird die Sortierung bei dieser Technik durch Zeiger hergestellt, die auf die einzelnen Speicherblöcke verweisen.

Das Zwischenspeichern eines Datenpakets erfolgt in der Regel weiterhin nur dann, wenn dies aufgrund der Größe der Speichereinrichtung möglich ist, sodass Datenpakete, welche noch nicht übermittelt wurden, nicht durch das Zwischenspeichern eines anderen Pakets zerstört werden.

Günstig ist es, wenn der durch die Übermittlung eines Datenpakets in das zweite Datennetz freigewordene Speicher in der Speichereinrichtung wieder für ein neu eintreffendes Datenpaket zur Verfügung gestellt wird. Somit werden die vorhandenen Ressourcen optimal ausgenutzt. Dabei kann ein Datenpaket aus der Speichereinrichtung physikalisch gelöscht oder aber auch nur als gelöscht markiert werden, wenn die in diesem Paket enthaltenen Daten für das Auslesen nicht mehr benötigt werden.

Vorteilhaft ist es,
- wenn Daten zu einem Zeitpunkt, welcher durch Hinzurechnen einer vorgebbaren Verzögerungszeit zum Zeitrang der Daten definiert wird, in das zweite Datennetz übermittelt werden und
- wenn der Startpunkt für das Auslesen der zwischengespeicherten Daten in der Speichereinrichtung entsprechend dieser Bedingung gewählt wird.

Die Daten werden also unter normalen Betriebsbedingungen zu einem Zeitpunkt, welcher durch Hinzurechnen einer vorgebbaren Verzögerungszeit zum Zeitrang der Daten definiert wird, aus der Speichereinrichtung ausgelesen und in das zweite Datennetz übermittelt. Durch die Bezugnahme auf eine vorgebbare Verzögerungszeit resultiert ein einfacher Algorithmus zur Bestimmung des Übermittlungszeitpunktes beziehungsweise kann das Verhalten des Übermittlungsverfahrens besonders gut vorhergesagt werden.

Normale Betriebsbedingungen sind dann gegeben, wenn es aufgrund der ingenieursmäßigen Auslegung der am Übertragungsverfahren beteiligten Komponenten zu einem bestimmten Zeitpunkt möglich ist, die aufgrund der diskontinuierlichen und ungeordneten Übertragung auftretenden Zeitdifferenzen auszugleichen und die richtige Reihenfolge der Datenpakete wieder herzustellen, sodass ein geordneter, im wesentlichen kontinuierlicher Datenstrom resultiert. Die Zeitpunkte, zu denen die Datenpakete übermittelt werden, unterliegen dabei betriebsbedingten und systemeigenen Toleranzen.

Günstig ist auch ein Verfahren, bei dem Daten synthetisch erzeugt werden, wenn der errechnete Zeitpunkt für die Übermittlung der Daten im Bezug auf die aktuelle Systemzeit in der Zukunft liegt und keine Daten mit diesem Zeitrang im Zwischenspeicher vorhanden sind.

Die Zeitspanne zwischen aktueller Systemzeit und dem Zeitpunkt, ab dem wieder Daten im Zwischenspeicher für die Übermittlung in das zweite Datennetz vorhanden sind, wird so vorteilhaft mit künstlich erzeugten Daten überbrückt. Die synthetische Erzeugung von Daten an sich ist jedoch nicht Bestandteil des erfindungsgemäßen Verfahrens.

Besonders vorteilhaft ist es weiterhin,
- wenn die Verzögerungszeit verkürzt wird, wenn ein Datenpaket zu spät empfangen wird um zwischengespeichert werden zu können und
- wenn die Verzögerungszeit verlängert wird, wenn ein Datenpaket zu früh empfangen wird um zwischengespeichert werden zu können.

Diese Ausgestaltung der Erfindung ermöglicht insbesondere auch die Behandlung von Systemzuständen, bei denen normale Betriebsbedingungen im Sinne der Erzeugung eines geordneten, im wesentlichen kontinuierlichen Datenstroms nur bedingt vorliegen, weil ein Datenpaket aufgrund der ingenieursmäßigen Auslegung der Speichereinrichtung nicht gespeichert werden kann. Die Verzögerungszeit wird hierbei automatisch an die tatsächlich vorliegenden Verhältnisse angepasst, sodass die Erzeugung eines kontinuierlichen Datenstroms aus den empfangenen Datenpaketen erleichtert wird.

Eine günstige Ausgestaltung der Erfindung ist weiterhin mit einer Variante gegeben, bei der das Auslesen der zwischengespeicherten Daten in vorgebbaren Zeitabständen, unabhängig von den Zeitpunkten des Zwischenspeicherns erfolgt, insbesondere in fixen Zeitabständen. Somit ist ein vergleichsweise einfacher Mechanismus zur Bestimmung der Zeitpunkte für das Auslesen der Daten gegeben.

Eine günstige Variante der Erfindung ist weiterhin gegeben,
- wenn ein Paket zusätzlich zum Zeitstempel eine laufende Nummer umfasst,
- wenn die Speichereinrichtung mehrteilig aufgebaut ist,
- wenn die Kopfinformationen der Datenpakete in einem Kopfinformationsspeicher entsprechend der fortlaufenden Nummer der Datenpakete sortiert gespeichert werden und
- wenn die Nutzdaten der Datenpakete in einem Nutzinformationsspeicher entsprechend der Zeitstempel der Datenpakete sortiert gespeichert werden.

Die logische Teilung von Nutz- und Kopfdaten, die teilweise durch den Aufbau der Datenpakete gegeben ist, wird so auf einfache Weise auf die Struktur der für die Zwischenspeicherung der Datenpakete nötigen Speichereinrichtung abgebildet. Beim Speichern wird gleichzeitig die richtige Reihenfolge der Datenpakete berücksichtigt.

Vorteilhaft ist es,
- wenn eine Maßzahl für den zeitlichen Unterschied zwischen dem Zeitstempel eines Pakets und der aktuellen Systemzeit, zu der dieses Paket manipuliert wird, berechnet wird,
- wenn ein Synchronisierungsvorgang ausgelöst wird, wenn aufgrund dieser Maßzahl ein vorgebbarer Schwellwert überschritten wird und
- wenn die Speichereinrichtung während des Synchronisierungsvorganges initialisiert wird.

Auch die Maßzahl selbst kann während dieses Synchronisierungsvorganges auch neu berechnet, insbesondere auf Null rückgesetzt werden. Diese Ausgestaltung der Erfindung ermöglicht insbesondere auch die Behandlung von Systemzuständen, bei denen normale Betriebsbedingungen im Sinne der Erzeugung eines geordneten, im wesentlichen kontinuierlichen Datenstroms nicht vorliegen. Diese Zustände können zum Beispiel auftreten, wenn es aufgrund der ingenieursmäßigen Auslegung der am Übertragungsverfahren beteiligten Komponenten zu einem bestimmten Zeitpunkt nicht mehr möglich ist, die aufgrund der diskontinuierlichen und ungeordneten Übertragung auftretenden Zeitdifferenzen auszugleichen und die richtige Reihenfolge der Datenpakete wieder herzustellen.

Eine vorteilhafte Ausgestaltung des erfindungsgemäßen Verfahrens ist weiterhin gegeben,
- wenn als Maßzahl zur Auslösung eines Synchronisierungsvorganges die Differenz zwischen einer durchschnittlichen Empfangsverzögerung und einer nominellen Empfangsverzögerung vorgesehen wird,
- wenn eine aktuelle Empfangsverzögerung zwischen der Systemzeit zum Empfangszeitpunkt eines eintreffenden neuen Pakets und dem Zeitstempel dieses neuen Pakets ermittelt wird und
- wenn die durchschnittliche Empfangsverzögerung über alle so berechneten aktuellen Empfangsverzögerungen einer vorgebbaren Anzahl bereits eingetroffener Pakete errechnet wird.

Auf diese Weise wird ein Synchronisierungsvorgang und damit gegebenenfalls auch eine Anpassung der im Übermittlungsverfahren ablaufenden Vorgänge an die durch das diskontinuierliche und ungeordnete Eintreffen der Datenpakete gegebenen Bedingungen initiiert. Der Mechanismus ist zwar aus einfachen mathematischen Operationen aufgebaut, bietet aufgrund der Mittelwertbildung jedoch trotzdem einen Ausgleich für einzelne Zeitdifferenzen, die beispielsweise wegen ihres vom Durchschnitt abweichenden Wertes für sich alleine einen Synchronisationsvorgang auslösen würden.

Günstig ist es weiterhin, wenn die nominelle Empfangsverzögerung gleich der durchschnittlichen Empfangsverzögerung gesetzt wird, wenn ein neues Paket nicht in der Speichereinrichtung gespeichert werden kann. Somit ist auch der Fall berücksichtigt, dass die Speichereinrichtung aufgrund ihrer ingenieursmäßigen Auslegung das Zwischenspeichern eines Datenpakets bis zur Übermittlung in das zweite Datennetz nicht ermöglicht. Denkbar ist die Realisierung der Speichereinrichtung als Ringspeicher und somit stellt dessen Länge einen wesentlichen Faktor für das Eintreten des erwähnten Falls dar.

Besonders vorteilhaft ist auch ein Verfahren,
- bei dem die nominelle Empfangsverzögerung während eines Synchronisierungsvorganges gleich der Zeitdifferenz zwischen der aktuellen Systemzeit und dem Zeitstempel des zuletzt empfangenen Pakets gesetzt wird und
- bei dem die durchschnittliche Empfangsverzögerung während des Synchronisierungsvorganges gleich der nominellen Empfangsverzögerung gesetzt wird.

Die Initialisierung der für die Auslösung eines Synchronisierungsvorganges maßgeblichen Parameter wird so durch Anwendung einfacher mathematischer Operationen erreicht.

Die Aufgabe der Erfindung wird auch durch eine Anordnung gelöst, welche zur Durchführung des erfindungsgemäßen Verfahrens vorbereitet ist, und
- bei der die Anordnung ein Eingangsmodul zum Empfang von Daten aus dem ersten Datennetz umfasst,
- bei der ein Ausgabemodul zum Senden von Daten in das zweite Datennetz vorhanden ist,
- bei der die Anordnung ein Synchronisationsmodul umfasst und
- bei der eine Speichereinrichtung zum Speichern von Datenpaketen entsprechend ihrer zeitlichen Reihenfolge vorhanden ist und
- bei der die Anordnung Mittel zum Auslesen der zwischengespeicherten Daten an einer vorgebbaren, von der durch die Speicherung von Datenpaketen resultierende Speichersegmentierung unabhängigen Stelle der Speichereinrichtung umfasst.

Die logische Teilung der Aufgaben, die sich aus der Durchführung des Verfahrens ergibt, nämlich Empfang beziehungsweise Zwischenspeicherung und Übermittlung beziehungsweise Auslesen von Datenpaketen, sowie Synchronisierung, wird so vorteilhaft auf Funktionsblöcke abgebildet. Eine eventuelle Fehlersuche ist daher vergleichsweise einfach durchzuführen.

Die Speichereinrichtung wird hinsichtlich des Auslesevorgangs bei der erfindungsgemäßen Anordnung im wesentlichen als unsegmentierter Speicher aufgefasst. Dadurch ist die Ausgabe von Daten mit beliebigen Zeitrang zu einem beliebigen Zeitpunkt möglich, wobei die kleinste Zeiteinheit dabei durch die Dauer eines Samples definiert wird.

Es wird darüber hinaus darauf hingewiesen, dass die beim erfindungsgemäßen Verfahren erwähnten Vorteile gleichermaßen auch für die erfindungsgemäße Anordnung gelten.

Günstig ist es, wenn die Anordnung Mittel zur Ausgabe der Daten zu einem Zeitpunkt, welcher durch Hinzurechnen einer vorgebbaren Verzögerungszeit zum Zeitrang der Daten definiert wird, umfasst.

Günstig ist es weiterhin,
- wenn die Speichereinrichtung mehrteilig aufgebaut ist,
- wenn ein Kopfinformationsspeicher für die Speicherung der Kopfinformationen der Datenpakete entsprechend der fortlaufenden Nummerierung der Datenpakete vorgesehen ist und
- wenn ein Nutzinformationsspeicher für die Speicherung der Nutzdaten der Datenpakete entsprechend der Zeitstempel der Datenpakete vorgesehen ist.

Die logische Teilung von Nutz- und Kopfdaten, die teilweise durch den Aufbau der Datenpakete gegeben ist, wird so auf einfache Weise auf die Struktur der für die Zwischenspeicherung der Datenpakete nötigen Speichereinrichtung abgebildet.

Besonders vorteilhaft ist es,
- wenn Mittel zur Berechnung einer Maßzahl für den zeitlichen Unterschied zwischen dem Zeitstempel eines Pakets und der aktuellen Systemzeit, zu der dieses Paket manipuliert wird, vorhanden sind,
- wenn Mittel zur Auslösung eines Synchronisierungsvorganges bei Überschreitung eines vorgebbaren Schwellwerts für diese Maßzahl umfasst sind und
- wenn Mittel zur Initialisierung der Speichereinrichtung während des Synchronisierungsvorganges vorhanden sind.

Die Anordnung umfasst also Mittel, mit denen ein Synchronisierungsvorgangs vergleichsweise einfach ausgelöst werden kann.

Eine weitere günstige Variante ergibt sich, wenn das Ausgabemodul Mittel zur synthetischen Erzeugung von Daten umfasst. Eine Zeitspanne, für die keine Daten im Zwischenspeicher für die Übermittlung in das zweite Datennetz vorhanden sind, kann mit dieser Ausgestaltung der Erfindung überbrückt werden.

Die Erfindung wird anhand eines in den Figuren dargestellten Ausführungsbeispiels näher erläutert, welches die bei der Übermittlung von Daten aus einem ersten Datennetz in ein zweites Datennetz ablaufenden Vorgänge betrifft.

Es zeigen:
Figur 1: eine Funktion INIT() zur Initialisierung der Daten;
Figur 2: eine Funktion SYNC() zur Synchronisation;
Figur 3: eine Funktion SAVE() zum Speichern eines empfangenen Datenpakets;
Figur 4: eine Funktion READ() zum Lesen und Senden eines gespeicherten Datenpakets;
Figur 5: eine Funktion MAKE_OUTBUF(), welche Daten in einem Ausgabepuffer OUTBUF für die Übermittlung in das zweite Datennetz vorbereitet.
Figur 6: den Inhalt des Nutzinformationsspeichers PPIM[] zum Zeitpunkt SYS_TIME()=78;
Figur 7: Wie Figur 6, nur zum Zeitpunkt SYS_TIME()=84;
Figur 8: Wie Figur 6, nur zum Zeitpunkt SYS_TIME()=90;
Figur 9: Wie Figur 6, nur zum Zeitpunkt SYS_TIME()=93;
Figur 10: Wie Figur 6, nur zum Zeitpunkt SYS_TIME()=107;

Die in den Figuren verwendeten Variablen und Funktionen sind in der folgenden Tabelle aufgeführt, wobei der Kurzbezeichnung der englische Langname, die deutschsprachige Bezeichnung und gegebenenfalls eine kurze Erklärung folgt, jeweils getrennt durch Strichpunkte:

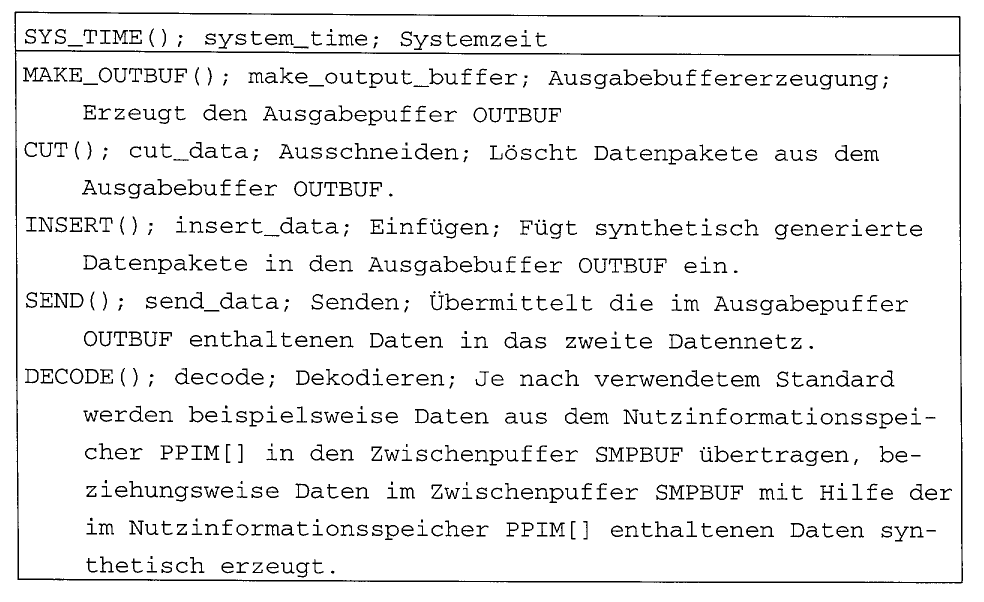

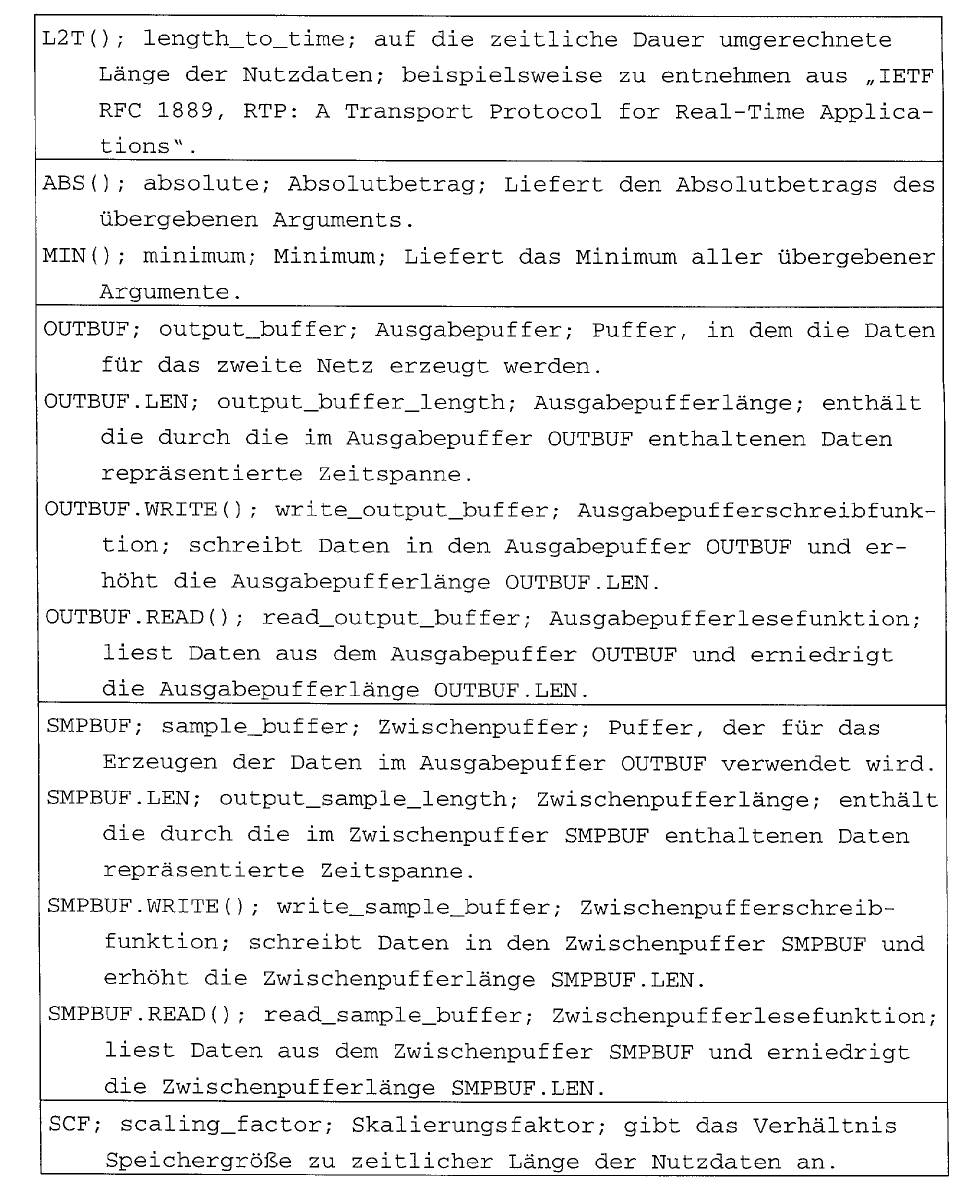

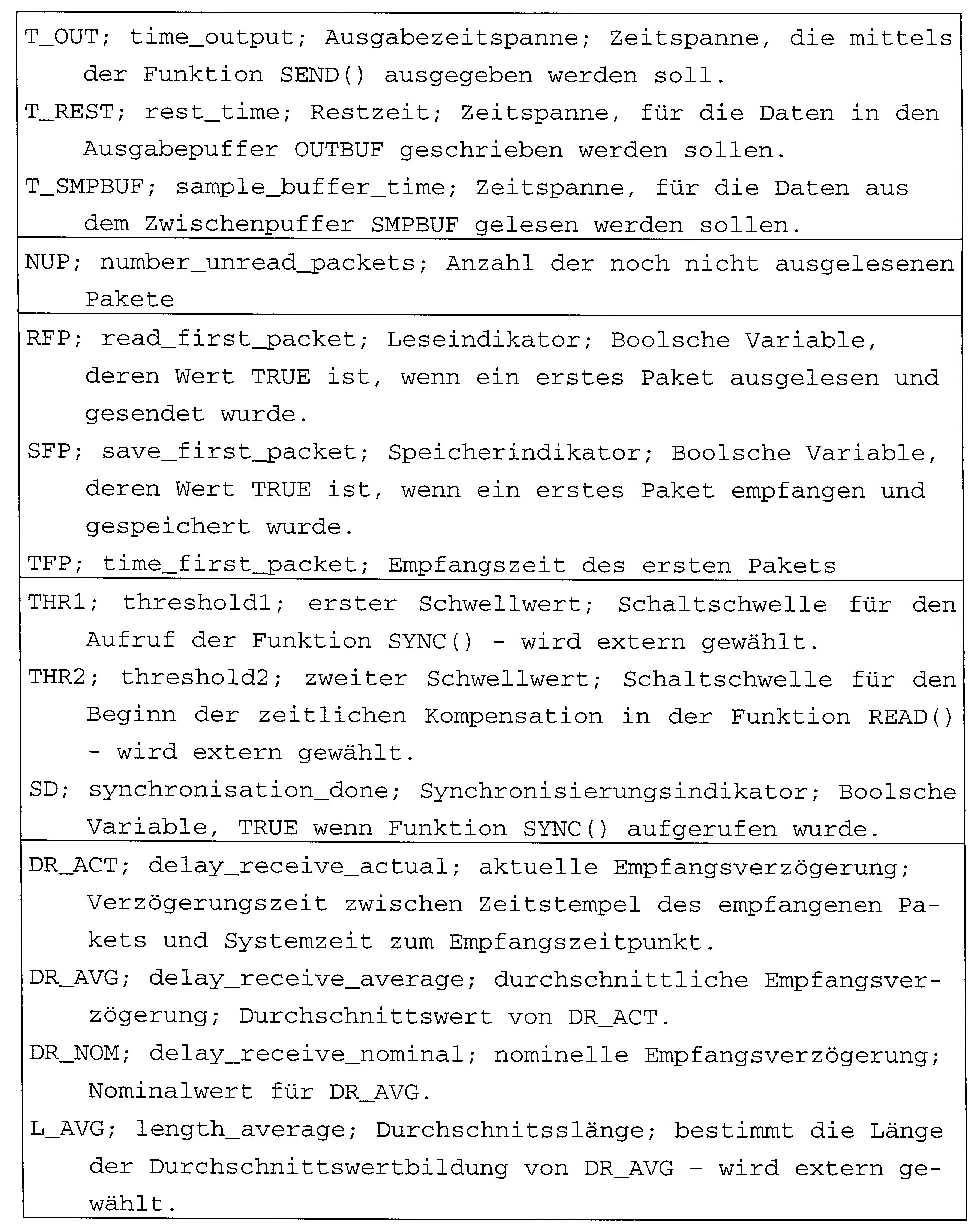

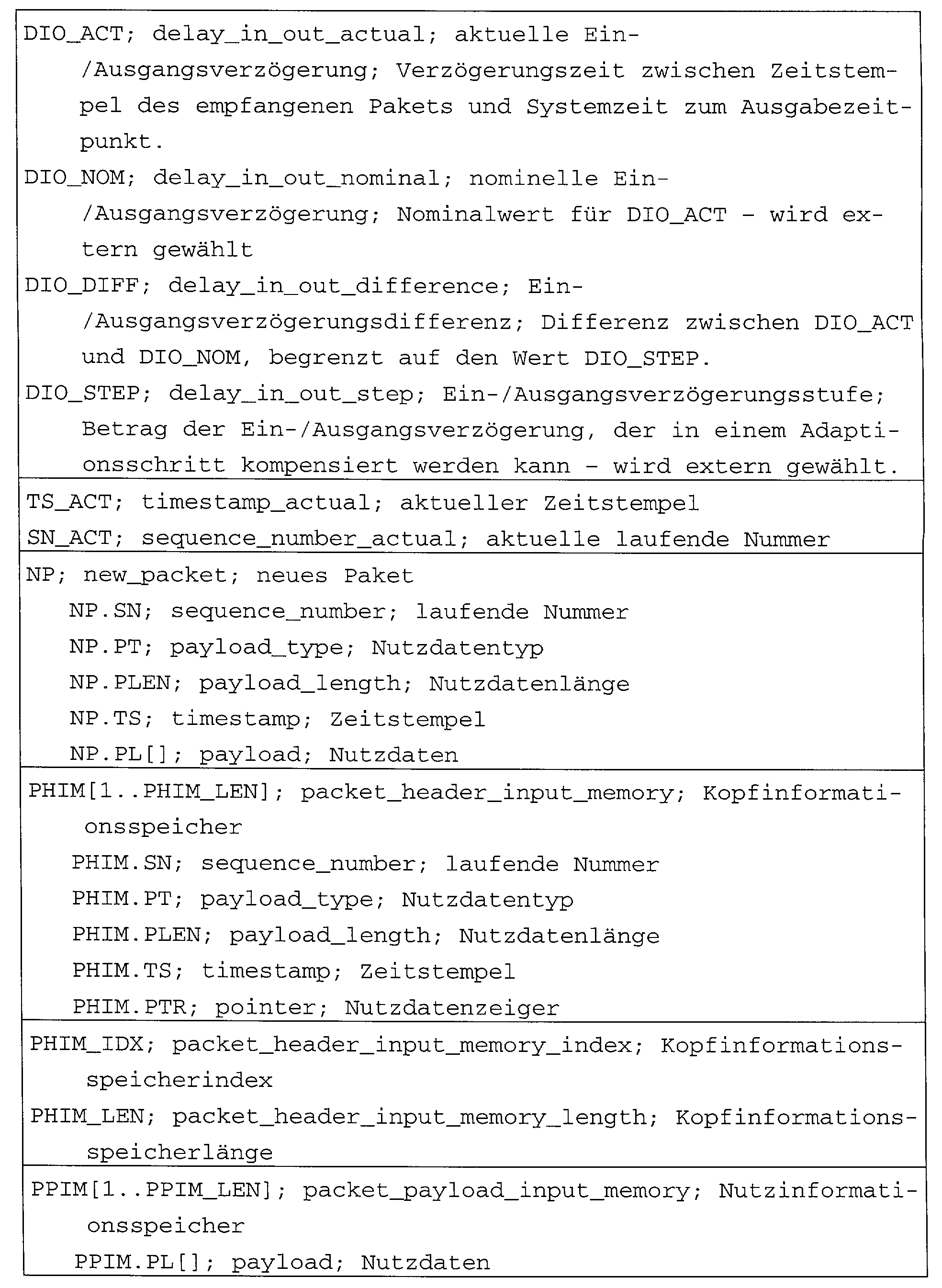

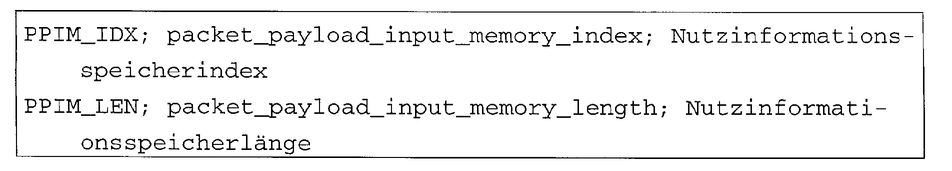

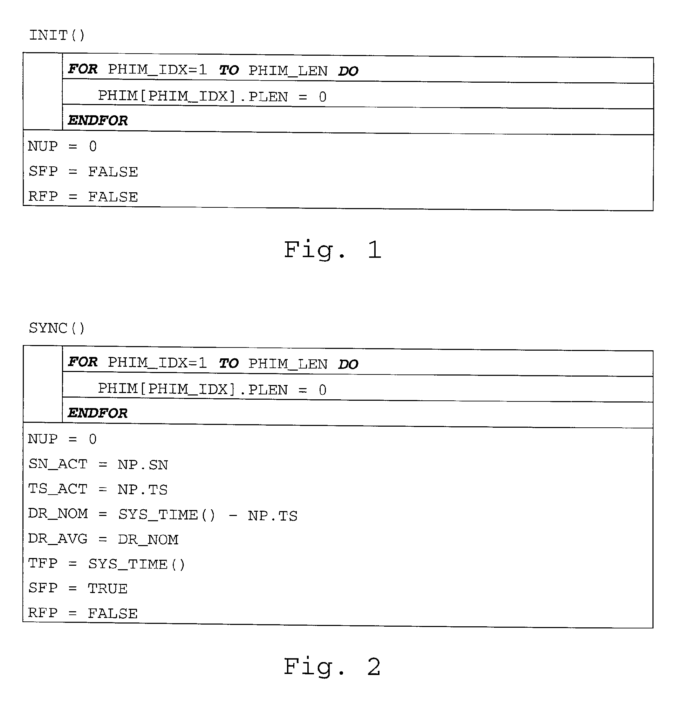

Figur 1 zeigt ein Struktogramm der Funktion INIT(). In einer Schleife wird jeweils die Nutzdatenlänge PLEN im Kopfinformationsspeicher PHIM mit dem Kopfinformationsspeicherindex PHIM_IDX auf 0 gesetzt, wobei der Kopfinformationsspeicherindex PHIM_IDX alle Werte von 1 bis zur Kopfinformationsspeicherlänge PHIM_LEN annimmt.

Weiterhin wird die Anzahl der noch nicht ausgelesen Pakete NUP auf 0 gesetzt und der Speicherindikator SFP und der Leseindikator RFP mit dem Wert FALSE initialisiert.

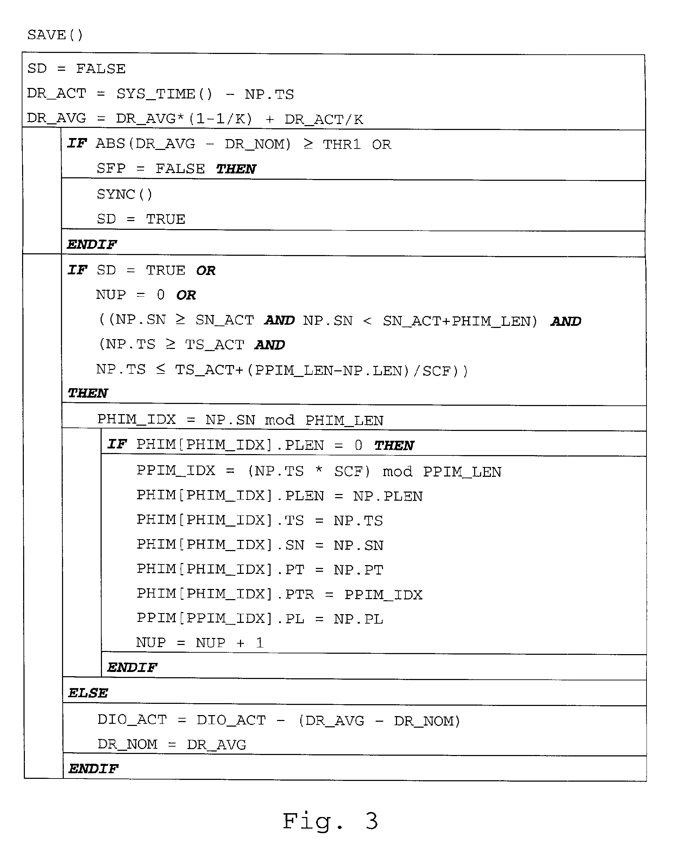

Figur 2 zeigt ein Struktogramm der Funktion SYNC(). In einer Schleife wird jeweils die Nutzdatenlänge PLEN im Kopfinformationsspeicher PHIM mit dem Kopfinformationsspeicherindex PHIM_IDX auf 0 gesetzt, wobei der Kopfinformationsspeicherindex PHIM_IDX alle Werte von 1 bis zur Kopfinformationsspeicherlänge PHIM_LEN annimmt.

Weiterhin wird die Anzahl der noch nicht ausgelesen Pakete NUP auf 0 gesetzt und die aktuelle laufende Nummer SN_ACT mit der laufenden Nummer des neuen Pakets NP.SN, sowie der aktuelle Zeitstempel TS_ACT mit dem Zeitstempel des neuen Pakets NP.TS initialisiert. Die nominelle Empfangsverzögerung DR_NOM wird aus der Differenz zwischen der Systemzeit SYS_TIME() und dem Zeitstempel des neuen Pakets NP.TS berechnet. Anschließend wird die durchschnittliche Empfangsverzögerung DR_AVG gleich der nominellen Empfangsverzögerung DR_NOM gesetzt, sowie die Empfangszeit des ersten Pakets TFP mit der Systemzeit SYS_TIME(), der Speicherindikator SFP mit dem Wert TRUE und der Speicherindikator RFP mit dem Wert FALSE initialisiert.

Figur 3 zeigt ein Struktogramm der Funktion SAVE(). Zu Beginn wird der Synchronisierungsindikator SD auf FALSE gesetzt.

Danach wird in die aktuelle Empfangsverzögerung DR_ACT die Differenz zwischen dem Rückgabewert der Funktion Systemzeit SYS_TIME() und dem Zeitstempel des neuen Pakets NP.TS eingetragen. Weiterhin wird die Differenz zwischen 1 und dem Reziprokwert der Durchschnittslänge L_AVG gebildet und mit der durchschnittlichen Empfangsverzögerung DR_AVG multipliziert. Anschließend wird zu diesem Ergebnis die aktuelle Empfangsverzögerung DR_ACT dividiert durch die Durchschnittslänge L_AVG addiert und die daraus resultierende Summe in die durchschnittliche Empfangsverzögerung DR_AVG übertragen.

Danach wird in einer Abfrage ermittelt, ob erstens der Absolutbetrag ABS() der Differenz zwischen der durchschnittlichen Empfangsverzögerung DR_AVG und der nominellen Empfangsverzögerung DR_NOM größer oder gleich dem ersten Schwellwert THR1 ist und zweitens ob der Speicherindikator SFP den Wert FALSE enthält. Trifft die erste oder die zweite Bedingung zu, so wird die Funktion SYNC() aufgerufen und anschließend der Synchronisierungsindikator SD auf TRUE gesetzt.

In einer weiteren Abfrage wird ermittelt, ob erstens der Synchronisierungsindikator SD auf TRUE gesetzt ist, zweitens ob die Anzahl der noch nicht ausgelesen Pakete NUP gleich 0 ist und drittens ob die laufende Nummer des neuen Pakets NP.SN im Intervall SN_ACT..SN_ACT+PHIM_LEN-1 liegt, also größer oder gleich der aktuellen laufenden Nummer SN_ACT und kleiner der Summe der aktuellen laufenden Nummer SN_ACT und der Kopfinformationsspeicherlänge PHIM_LEN ist, und ob der Zeitstempel des neuen Pakets NP.TS im Intervall TS_ACT..TS_ACT+(PPIM_LEN-NP.PLEN)/SCF liegt, also größer oder gleich dem aktuellen Zeitstempel TS_ACT und kleiner oder gleich der Summe des aktuellen Zeitstempels TS_ACT und der Differenz der Nutzinformationsspeicherlänge PPIM_LEN und der Nutzdatenlänge des neuen Paket NP.PLEN geteilt durch den Skalierungsfaktor SCF ist. Trifft eine der drei Bedingungen zu, so wird ein positiver Zweig durchlaufen, tritt keine der drei Bedingungen zu, ein negativer Zweig.

Im positiven Zweig wird die Modulo-Operation zwischen der laufenden Nummer des neuen Pakets NP.SN und der Kopfinformationsspeicherlänge PHIM_LEN gebildet und das Ergebnis in den Kopfinformationsspeicherindex PHIM_IDX übertragen. Anschließend wird abgefragt, ob die Nutzdatenlänge PLEN im Kopfinformationsspeicher PHIM mit dem Kopfinformationsspeicherindex PHIM_IDX gleich 0 ist.

Trifft diese innere Bedingung zu, so wird die Modulo-Operation zwischen dem Produkt des Zeitstempels des neuen Pakets NP.TS und dem Skalierungsfaktor SCF mit der Nutzinformationsspeicherlänge PPIM_LEN gebildet und das Ergebnis in den Nutzinformationsspeicherindex PPIM_IDX übertragen. Anschließend werden der Zeitstempel TS, die laufende Nummer SN und der Nutzdatentyp PT im Kopfinformationsspeicher PHIM mit dem Kopfinformationsspeicherindex PHIM_IDX jeweils auf den Wert des Zeitstempels TS, der laufende Nummer SN und des Nutzdatentyps PT des neues Pakets NP gesetzt. In den Nutzdatenzeiger PTR im Kopfinformationsspeicher PHIM mit dem Kopfinformationsspeicherindex PHIM_IDX wird der Wert der Nutzinformationsspeicherindex PPIM_IDX übertragen. Danach wird Nutzinformation PL im Nutzinformationsspeicher PPIM mit dem Nutzinformationsspeicherindex PPIM_IDX gleich der Nutzinformation des neuen Pakets NP.PL gesetzt.

Abschließend wird die Anzahl der noch nicht ausgelesen Pakete NUP inkrementiert. Dies ist gleichzeitig die letzte Anweisung der bedingten Programmausführung des positiven Zweigs und die letzte Anweisung der inneren Bedingung.

Im negativen Zweig wird die Differenz zwischen der durchschnittlichen Empfangsverzögerung DR_AVG und der nominellen Empfangsverzögerung DR_NOM gebildet, von der aktuellen Ein-/Ausgangsverzögerung DIO_ACT abgezogen und das Ergebnis dieser Operation in die aktuelle Ein-/Ausgangsverzögerung DIO_ACT übertragen. Abschließend wird die nominelle Empfangsverzögerung DR_NOM gleich der durchschnittlichen Empfangsverzögerung DR_AVG gesetzt. Dies stellt gleichzeitig die letzte Anweisung der bedingten Programmausführung des negativen Zweigs und die letzte Anweisung der Funktion SAVE() dar.

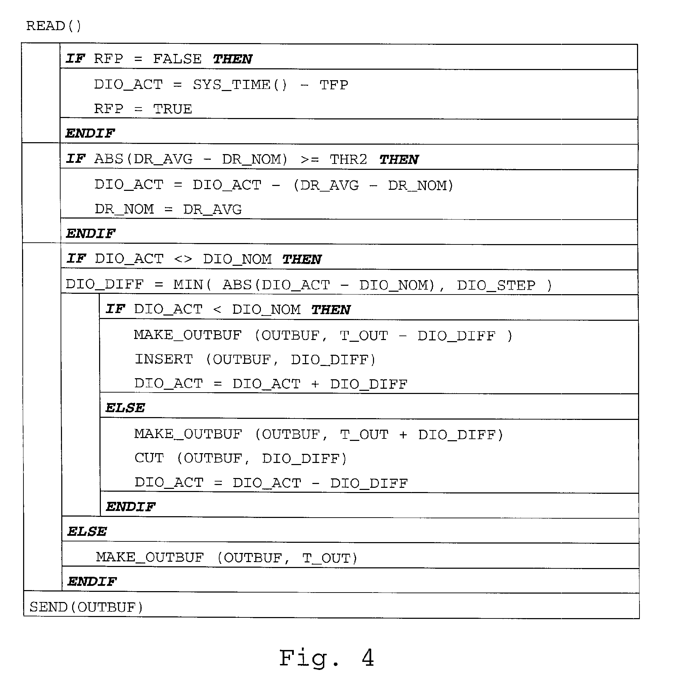

Figur 4 zeigt ein Struktogramm der Funktion READ(). Zu Beginn wird abgefragt, ob der Leseindikator RFP auf FALSE gesetzt ist. Trifft dies zu, so wird die Differenz zwischen der Systemzeit SYS_TIME() und der Empfangszeit des ersten Pakets TFP gebildet und in die aktuelle Ein-/Ausgangsverzögerung DIO_ACT übertragen. Danach wird der Leseindikator RFP auf TRUE gesetzt. Damit ist das Ende der bedingten Ausführung erreicht.

Weiterhin wird der Absolutbetrag ABS() der Differenz zwischen der durchschnittlichen Eingangsverzögerung DR_AVG und der nominellen Eingangsverzögerung DR_NOM gebildet. Ist dieser Betrag größer oder gleich einem zweiten Schwellwert THR2, wird die Differenz zwischen der durchschnittlichen Empfangsverzögerung DR_AVG und der nominellen Empfangsverzögerung DR_NOM gebildet, von der aktuellen Ein-/Ausgangsverzögerung DIO_ACT abgezogen und das Ergebnis dieser Operation in die aktuelle Ein-/Ausgangsverzögerung DIO_ACT übertragen. Abschließend wird die nominelle Empfangsverzögerung DR_NOM gleich der durchschnittlichen Empfangsverzögerung DR_AVG gesetzt. Damit ist das Ende der bedingten Ausführung erreicht.

In einer weiteren Abfrage wird ermittelt, ob die aktuelle Ein-/Ausgangsverzögerung DIO_ACT ungleich der nominellen Ein-/Ausgangsverzögerung DIO_NOM ist. Trifft diese äußere Bedingung zu, wird Ein-/Ausgangsverzögerungsdifferenz DIO_DIFF aus dem Minimum MIN() von DIO_STEP und dem Absolutbetrag ABS() der Differenz zwischen aktueller Ein-/Ausgangsverzögerung DIO_ACT und nomineller Ein-/Ausgangsverzögerung DIO_NOM gebildet. In einer weiteren Abfrage wird ermittelt, ob die aktuelle Ein-/Ausgangsverzögerung DIO_ACT kleiner als die nominelle Ein-/Ausgangsverzögerung DIO_NOM ist. Trifft diese Bedingung zu, wird ein positiver Zweig durchlaufen, andernfalls ein negativer Zweig.

Im positiven Zweig wird die Ausgabepuffererzeugung MAKE_OUTBUF() aufgerufen, wobei im gezeigten Beispiel symbolhaft der Ausgabepuffer OUT_BUF und die Ausgabezeitspanne T_OUT, verringert um die Ein-/Ausgangsverzögerungsdifferenz DIO_DIFF, übergeben werden. Danach wird die Einfügefunktion INSERT() aufgerufen, wobei im gezeigten Beispiel symbolhaft der Ausgabepuffer OUT_BUF und die Ein-/Ausgangsverzögerungsdifferenz DIO_DIFF übergeben werden. Danach wird die aktuelle Ein-/Ausgangsverzögerung DIO_ACT um den Wert der Ein-/Ausgangsverzögerungsdifferenz DIO_DIFF erhöht.

Im negativen Zweig wird die Ausgabepuffererzeugung MAKE_OUTBUF() aufgerufen, wobei hier der Ausgabepuffer OUT_BUF und die Ausgabezeitspanne T_OUT, vergrößert um die Ein-/Ausgangsverzögerungsdifferenz DIO_DIFF, übergeben werden. Danach wird die Ausschneidefunktion CUT() aufgerufen. Als symbolhafte Übergabeparameter dienen dabei der Ausgabepuffer OUT_BUF und die Ein-/Ausgangsverzögerungsdifferenz DIO_DIFF übergeben werden. Danach wird die aktuelle Ein-/Ausgangsverzögerung DIO_ACT um den Wert der Ein-/Ausgangsverzögerungsdifferenz DIO_DIFF verringert. Damit endet die Ausführung der inneren Bedingung.

Trifft die äußere Bedingung nicht zu, wird die Ausgabepuffererzeugung MAKE_OUTBUF() aufgerufen, wobei symbolhaft der Ausgabepuffer OUT_BUF und die Ausgabezeitspanne T_OUT übergeben werden. Dies stellt gleichzeitig die letzte Anweisung des bedingten Zweigs dar.

Als letzter Schritt der Funktion READ() werden die im Ausgabepuffer OUTBUF zwischengespeicherten Daten mit Hilfe einer Sendefunktion SEND() in das zweite Datennetz übermittelt, wobei im gezeigten Beispiel symbolhaft der Ausgabepuffer OUTBUF() an die Sendefunktion SEND() übergeben wird.

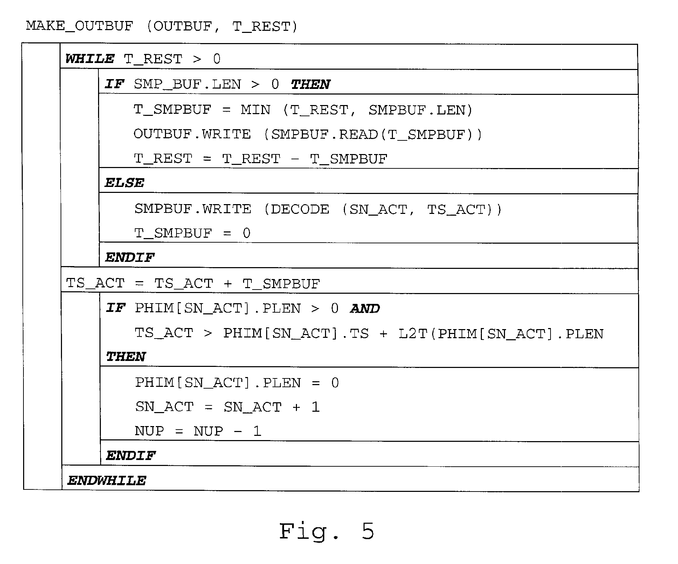

Figur 5 zeigt ein Struktogramm der Funktion MAKE_OUTBUF(). In dieser Funktion wird zunächst der Wert der übergebenen Zeitspanne in die Restzeit T_REST übertragen. Der als Parameter übergebene Ausgabepuffer OUTBUF dient in diesem Beispiel zur Übergabe des Ergebnisses der Funktion MAKE_OUT() an die aufrufende Funktion und wird an dieser Stelle nicht verwendet.

Der im folgenden beschriebene Schleifenkörper wird solange wiederholt ausgeführt, solange die Restzeit T_REST größer 0 ist.

Zu Beginn des Schleifenkörpers wird überprüft, ob die Länge des Zwischenpuffers SMPBUF größer als 0 ist. Trifft die Bedingung zu, wird ein positiver Zweig durchlaufen, andernfalls ein negativer Zweig.

Im positiven Zweig wird zunächst das Minimum MIN() aus der Restzeit T_REST und der Länge des Zwischenpuffers SMP_BUF.LEN gebildet und das Ergebnis in die Zwischenpufferzeitspanne T_SMPBUF gespeichert. Danach wird die der Zwischenpufferzeitspanne T_SMPBUF entsprechende Anzahl an Datenpaketen aus dem Zwischenpuffer SMPBUF in den Ausgabepuffer OUTBUF übertragen, wobei symbolhaft die Lesefunktion SMPBUF.READ() für den Zwischenpuffer SMPBUF und die Schreibefunktion OUTBUF.WRITE() für den Ausgabepuffer OUTBUF aufgerufen werden. Abschließend wird die Restzeit T_REST um den Wert der Zwischenpufferzeitspanne T_SMPBUF verringert.

Im negativen Zweig wird zunächst die Payload PL eines Datenpaketes aus der Speichereinrichtung PPIM ausgelesen, mit Hilfe der Dekodierfunktion DECODE() für die Übermittlung in das zweite Datennetz aufbereitet und das Ergebnis im Zwischenpuffer SMPBUF gespeichert, wobei symbolhaft die Schreibefunktion SMPBUF.WRITE für den Zwischenpuffer SMPBUF aufgerufen wird. Anschließend wird die Zwischenpufferzeit T_SMPBUF mit dem Wert 0 initialisiert. Dies stellt gleichzeitig die letzte Anweisung der bedingten Ausführung dar.

Die Dekodierfunktion DECODE() dient im gezeigten Beispiel dazu, Daten von einem im ersten Netz verwendeten Format in ein im zweiten Netz verwendetes Format umzuwandeln. Beispiele für eine solche Funktion sind etwa aus den in der Einleitung erwähnten Standards bekannt. In einem einfachen Fall werden die zwischengespeicherten Samples aus der Speichereinrichtung ausgelesen und unverändert in den Zwischenpuffer SMPBUF übertragen. Denkbar ist jedoch auch, dass nur Informationen über ein Signal aus dem ersten Datennetz empfangen wurden und aus diesen Informationen erst ein Signal für das zweite Datennetz generiert werden muss. Anstatt ein sinusförmiges Signal in Form von einzelnen Abtastwerten zu übermitteln kann dies etwa durch Übermittlung von Frequenz und Amplitude erfolgen. Aus diesen Informationen wird mit Hilfe der Dekodierfunktion DECODE() wieder das Sinussignal selbst generiert.

In einem weiteren Ausführungsschritt des Schleifenkörpers wird der Zeitstempel TS_ACT wird um die Zwischenpufferzeit T_SMPBUF erhöht.

Danach wird in einer Abfrage ermittelt, ob die Nutzdatenlänge PLEN im Kopfinformationsspeicher PHIM mit der aktuellen laufenden Nummer SN_ACT als Index größer als 0 ist und ob der aktuelle Zeitstempel TS_ACT größer als die Summe des Zeitstempels TS im Kopfinformationsspeicher PHIM mit der aktuellen laufenden Nummer SN_ACT als Index und der auf die zeitliche Dauer umgerechnete Länge der Nutzdaten L2T() ist. Als Argument für die auf die zeitliche Dauer umgerechnete Länge der Nutzdaten L2T() wird dabei symbolhaft die Nutzdatenlänge PLEN im Kopfinformationsspeicher PHIM mit der aktuellen laufenden Nummer SN_ACT als Index übergeben.

Trifft die Bedingung zu, so wird die Nutzdatenlänge PLEN im Kopfinformationsspeicher PHIM mit der aktuellen laufenden Nummer SN_ACT als Index auf 0 gesetzt, die aktuelle laufende Nummer SN_ACT um 1 erhöht und die Anzahl der noch nicht ausgelesen Pakete NUP um 1 erniedrigt. Dies stellt gleichzeitig die letzte Anweisung der bedingten Programmausführung und die letzte Anweisung der Funktion MAKE_OUTBUF() dar.

Die Funktion des in den Figuren dargestellten Ausführungsbeispiels ist wie folgt.

Zu Beginn des Verfahrens wird die Funktion INIT() aufgerufen, mittels der wesentliche Variablen initialisiert werden.

Beim Eintreffen eines Datenpakets wird die Funktion SAVE() aufgerufen, wobei der Inhalt des eingetroffenen Datenpakets bereits im neuen Paket NP gespeichert wurde. Dieser Schritt ist in den Figuren nicht dargestellt.

Zu Beginn der Funktion SAVE() werden die aktuelle Empfangsverzögerung DR_ACT sowie die durchschnittliche Empfangsverzögerung DR_AVG neu berechnet.

Ist das Datenpaket das erste eintreffende Paket oder ist die Differenz zwischen durchschnittlicher Empfangsverzögerung DR_AVG und nomineller Empfangsverzögerung DR_NOM größer oder gleich dem ersten Schwellwert THR1, dessen Festsetzung nicht Bestandteil des Ausführungsbeispiels ist, so wird die Funktion SYNC() aufgerufen. Diese hat im wesentlichen die Aufgabe, bestimmte Variablen zu initialisieren, kann aber im Gegensatz zur Funktion INIT() öfter als einmal aufgerufen werden.

Sofern im Kopfinformationsspeicher PHIM[] und Nutzinformationsspeicher PPIM[] der vom neuen Paket NP zu belegende Speicherplatz noch verfügbar ist, wird das neue Paket NP an der entsprechenden Stelle abgespeichert. Die Position innerhalb des Kopfinformationsspeichers PHIM[] und des Nutzinformationsspeichers PPIM[] wird dabei mit Hilfe des Zeitstempels und der laufenden Nummer des neuen Pakets NP.TS und NP.SN ermittelt. Der Kopfinformationsspeicher PHIM[] und der Nutzinformationsspeicher PPIM[] sind im gezeigten Beispiel als Ringspeicher mit fixer Größe organisiert. Die neuen Pakete NP werden dabei in der Reihenfolge der Ausgabe gespeichert, und zwar die Kopfinformation sortiert nach der laufenden Nummer des neuen Pakets NP.SN im Kopfinformationsspeicher PHIM[] und die Nutzinformation sortiert nach dem Zeitstempel des neuen Pakets NP.TS im Nutzinformationsspeicher PPIM[]. Weiterhin wird die Anzahl der noch nicht ausgelesen Pakete NUP um 1 erhöht.

Konnte das neue Paket NP nicht im Kopfinformationsspeicher PHIM[] und im Nutzinformationsspeicher PPIM[] eingeordnet werden, so werden die Werte für die aktuelle Ein-/Ausgangsverzögerung DIO_ACT und die nominelle Empfangsverzögerung DR_NOM neu berechnet.

Die Funktion READ() wird zu fest vorgegebenen Zeitpunkten aufgerufen, wobei die Wahl der Zeitpunkte nicht Bestandteil des in den Figuren gezeigten Ausführungsbeispiels ist.

Beim ersten Aufruf der Funktion READ() wird die aktuelle Ein-/Ausgangsverzögerung DIO_ACT initialisiert. Unter der Annahme dass der zweite Schwellwert THR2 nicht überschritten wird und die aktuelle Ein-/Ausgangsverzögerung DIO_ACT kleiner der nominellen Ein-/Ausgangsverzögerung DIO_NOM ist, wird als nächster Schritt der Wert für die Ein-/Ausgangsverzögerungsdifferenz DIO_DIFF gebildet. Im Anschluss wird die Funktion MAKE_OUTBUF() aufgerufen, welche Nutzdaten für die Ausgabezeitspanne T_OUT vermindert um die Ein-/Ausgangsverzögerungsdifferenz DIO_DIFF im Ausgabepuffer OUTBUF bereitstellt. Im Anschluss werden mit Hilfe der Einfügefunktion INSERT() noch weitere Daten für die durch die Ein-/Ausgangsverzögerungsdifferenz DIO_DIFF repräsentierte Zeitspanne synthetisch erzeugt und ebenfalls in den Ausgabepuffer OUTBUF() bereitgestellt. Im Falle dass die aktuelle Ein-/Ausgangsverzögerung DIO_ACT größer als die nominelle Ein-/Ausgangsverzögerung DIO_NOM ist, würden dagegen Daten mit Hilfe der Ausschneidefunktion CUT() wieder aus dem Ausgabepuffer OUTBUF gelöscht werden. Mit der Einfügefunktion INSERT() und der Ausschneidefunktion CUT() soll die aktuelle Ein-/Ausgangsverzögerung DIO_ACT an die nominelle Ein-/Ausgangsverzögerung DIO_NOM angepasst werden. Ist die aktuelle Ein-/Ausgangsverzögerung DIO_ACT gleich der nominellen Ein-/Ausgangsverzögerung DIO_NOM ist dagegen kein weiterer Einfüge- oder Ausschneidevorgang erforderlich. Nachdem der Ausgabepuffer OUTBUF entsprechend aufbereitet worden ist, wird er mit Hilfe der Sendefunktion SEND() in das zweite Datennetz übermittelt.

Sowohl die Sendefunktion SEND(), als auch die Wahl der nominellen Ein-/Ausgangsverzögerung DIO_NOM sind nicht Bestandteil des Ausführungsbeispiels.

Beim Aufruf der Ausgabepuffererzeugung MAKE_OUTBUF() werden unter der Annahme, dass die übergebene Zeitspanne und somit die Restzeit T_REST größer 0 und die Zwischenpufferlänge SMPBUF.LEN gleich 0 ist, mit Hilfe der Dekodierfunktion DECODE() Daten im Zwischenpuffer SMPBUF bereitgestellt, beispielsweise die Daten eines sogenannten Frames. Die Funktion SMPBUF.WRITE erhöht dabei die Zwischenpufferlänge SMPBUF.LEN.

Sofern das Paket im Kopfinformationsspeicher PHIM mit dem Index der aktuellen laufenden Nummer SN_ACT nicht mehr benötigt wird, erfolgt dann die Freigabe des entsprechenden Speicherbereichs im Kopfinformationsspeicher PHIM. Weiterhin wird die aktuelle laufende Nummer SN_ACT und die Anzahl der noch nicht ausgelesen Pakete NUP aktualisiert.

Da die Restzeit T_REST im ersten Schleifendurchlauf nicht verändert wurde und daher größer 0 ist, wird nun beim zweiten Schleifendurchlauf die Zwischenpufferzeit T_SMPBUF bestimmt. Als nächster Schritt werden Daten entsprechend der Zwischenpufferzeit T_SMPBUF aus dem Zwischenpuffer SMPBUF mit Hilfe der Funktion SMPBUF.READ() ausgelesen und mit Hilfe der Funktion OUTBUF.WRITE() in den Ausgabepuffer OUTBUF übertragen. Die Zwischenpufferlänge SMPBUF.LEN, sowie die Ausgabepufferlänge OUTBUF.LEN werden dabei von der Funktion SMPBUF.READ(), beziehungsweise von der Funktion OUTBUF.WRITE() angepasst. Anschließend wird die Restzeit T_REST neu berechnet.

Im vorliegenden Beispiel wird angenommen, dass bereits beim zweiten Schleifendurchlauf Daten entsprechend der übergebenen Zeitspanne in den Ausgabepuffer OUTBUF eingetragen werden konnten. Die Ausgabepuffererzeugung MAKE_OUTBUF() wird daher an dieser Stelle abgeschlossen. Andernfalls wird der Schleifenkörper so lange durchlaufen, bis alle geforderten Daten in den Ausgabepuffer OUTBUF eingetragen wurden.

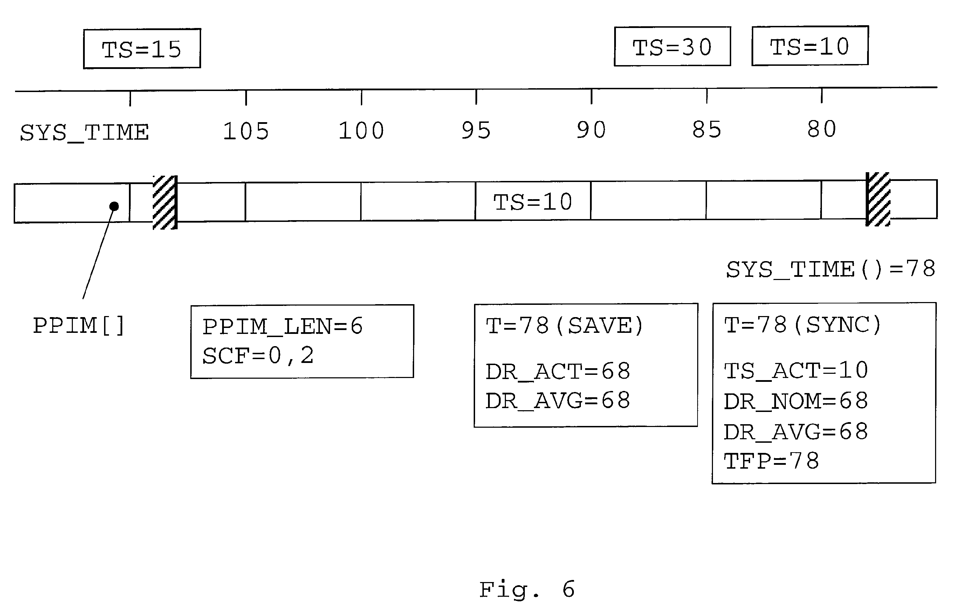

Figur 6 zeigt den Inhalt des Nutzinformationsspeichers PPIM[] zum Zeitpunkt SYS_TIME()=78. Anhand eines Zeitstrahls, auf dem die Systemzeit SYS_TIME() im Bereich von 75 bis 115 aufgetragen ist, wird das Eintreffen der zu empfangenden Pakete verdeutlicht. Die Zeiteinheit wird dabei in der Darstellung nicht berücksichtigt. Ein erstes Paket mit dem Zeitstempel TS=10 trifft zum Zeitpunkt 78, ein zweites Paket mit dem Zeitstempel TS=30 zum Zeitpunkt 84 und ein drittes Paket mit dem Zeitstempel TS=15 zum Zeitpunkt 107 bei der erfindungsgemäßen Vorrichtung ein. Die Pakete, die jeweils Daten für die Zeitdauer 5 beinhalten, sind daher entsprechend ihres Zeitranges auf dem Zeitstrahl angeordnet. Darunter ist der Nutzinformationsspeicher PPIM[] dargestellt, welcher im gezeigten Beispiel als Ringspeicher mit der Nutzinformationsspeicherlänge PPIM_LEN=6 organisiert ist. Da die Länge eines Datenpaketes hier 5 beträgt ergibt sich der Skalierungsfaktor SCF zu 0,2. Für die Durchschnittslänge L_AVG wird hier beispielhaft der Wert 2 gewählt. Der schraffierte Bereich des Nutzinformationsspeichers PPIM[] zeigt den bereits verstrichenen Anteil der Zeit. Weiterhin sind für den Zustand der Vorrichtung relevante Parameter dargestellt.

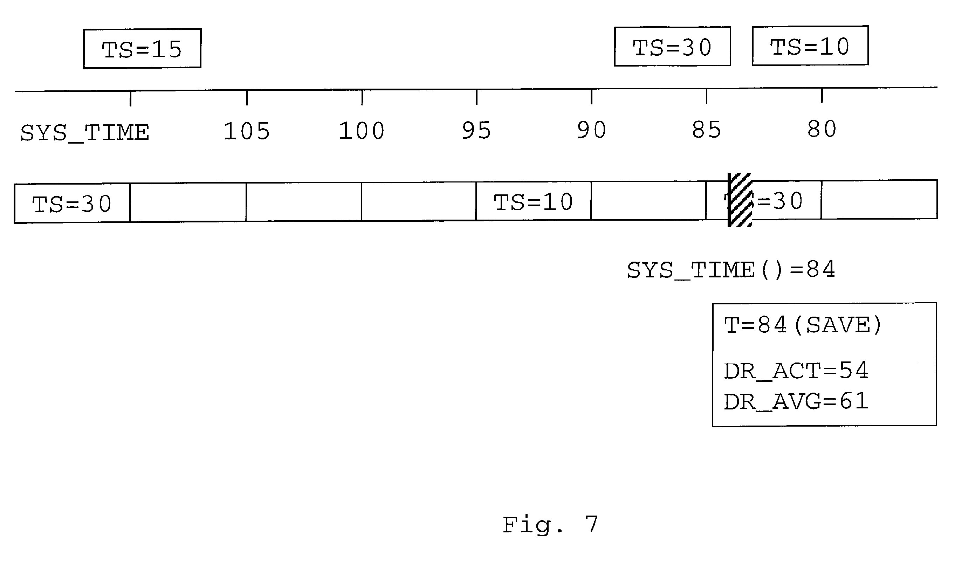

Die Figuren 7 bis 10 entsprechen inhaltlich der Figur 6, zeigen die Anordnung aber zu anderen Zeitpunkten.

Der Ablauf des Übermittlungsprozesses, welcher zu den in den Figuren 6 bis 10 dargestellten Zuständen führt, ist wie folgt.

Zum Zeitpunkt SYS_TIME()=78 trifft das erste Paket mit dem Zeitstempel TS=10 bei der erfindungsgemäßen Vorrichtung ein. Zur Speicherung des Pakets wird die Funktion SAVE() aufgerufen. Da der Speicherindikator SFP zu diesem Zeitpunkt den Wert FALSE beinhaltet, wird zu Beginn die Funktion SYNC() ausgeführt. Die Ausführungszeit der Prozessschritte wird im Beispiel generell mit 0 angenommen, ein Prozessschritt folgt in dieser idealisierten Darstellung also verzögerungsfrei auf einen vorhergehenden Prozessschritt.

In der Figur 6 sind Werte relevanter Parameter nach Ausführung der Funktion SYNC() zum Zeitpunkt T=78(SYNC) dargestellt. Der aktuelle Zeitstempel TS_ACT wurde auf 10, die nominelle Empfangsverzögerung DR_NOM auf 68, die durchschnittliche Empfangsverzögerung DR_AVG ebenfalls auf 68 und die Empfangszeit des ersten Pakets auf 78 gesetzt. Da alle Bedingungen für die Speicherung des Pakets erfüllt sind, wird das erste Paket mit dem Zeitstempel TS=10 gespeichert, wobei in der Figur nur der Nutzinformationsspeicher PPIM[] dargestellt ist.

Denkbar ist, dass der Nutzinformationsspeicher PPIM[] beim Eintreffen des ersten Pakets, beginnend mit dem Nutzinformationsspeicherindex PPIM_IDX=0, initialisiert wird. Die Speicherposition für das erste Paket ergibt sich daher aus PPIM_IDX = (NP.TS * SCF) mod PPIM_LEN zu PPIM_IDX = (10 * 0,2) mod 6 = 2.

In der Figur 6 sind weiterhin Werte relevanter Parameter nach Ausführung der Funktion SAVE() zum Zeitpunkt T=78(SAVE) dargestellt. Die aktuelle Empfangsverzögerung DR_ACT und die durchschnittliche Empfangsverzögerung DR_AVG wurden auf 68 gesetzt.

Zum Zeitpunkt SYS_TIME()=84 trifft das zweite Paket mit dem Zeitstempel TS=30 bei der erfindungsgemäßen Vorrichtung ein. Zur Speicherung des Pakets wird wieder die Funktion SAVE() aufgerufen. Da der Speicherindikator SFP aber zu diesem Zeitpunkt bereits den Wert TRUE beinhaltet, wird die Funktion SYNC nicht mehr ausgeführt. Da alle Bedingungen für die Speicherung des Pakets erfüllt sind, wird das zweite Paket mit dem Zeitstempel TS=30 an der dafür vorgesehenen Position gespeichert, wobei das Paket in der Figur der Vollständigkeit halber zweimal dargestellt ist, da es sich beim Nutzinformationsspeicher PPIM[] um einen Ringspeicher handelt.

In der Figur 7 sind zusätzlich Werte relevanter Parameter nach Ausführung der Funktion SAVE() zum Zeitpunkt T=84(SAVE) dargestellt. Die aktuelle Empfangsverzögerung DR_ACT wurde auf 54 und die durchschnittliche Empfangsverzögerung DR_AVG auf 61 gesetzt.

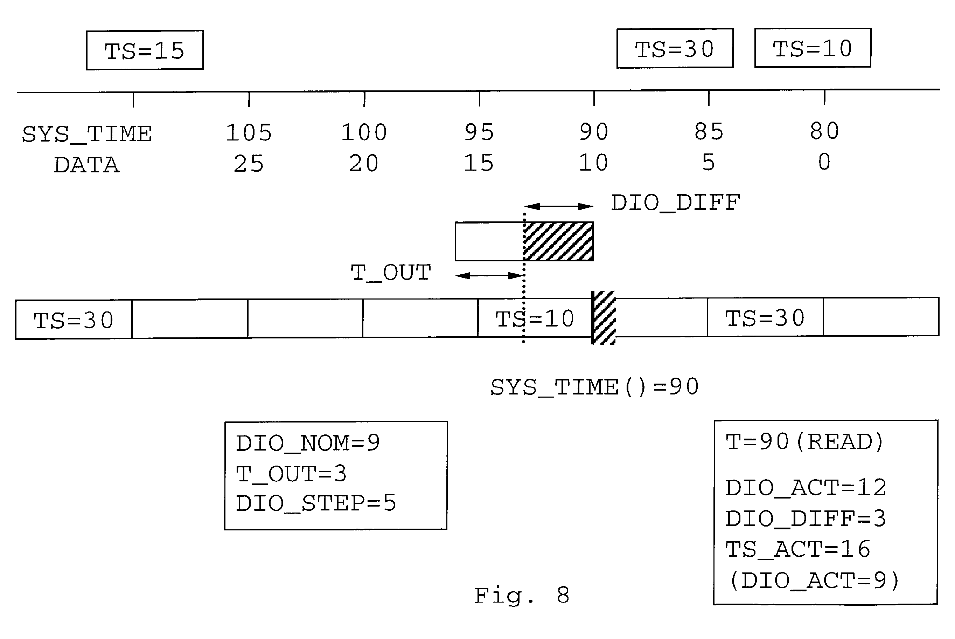

Figur 8 zeigt die Anordnung zum Zeitpunkt SYS_TIME()=90. Im gezeigten Beispiel wird angenommen, dass die Funktion READ() zu diesem Zeitpunkt zum ersten Mal und dann entsprechend der Ausgabezeitspanne T_OUT=3 im Abstand 3 immer wiederkehrend aufgerufen wird. Die nominelle Ein-/Ausgangsverzögerung DIO_NOM wird mit 9, die Ein-/Ausgangsverzögerungsstufe DIO_STEP mit 5 angenommen.

Da der Leseindikator RFP zum Zeitpunkt T=90 den Wert FALSE beinhaltet, wird die aktuelle Ein-/Ausgangsverzögerung DIO_ACT auf 12 gesetzt. Für die Ein-/Ausgangsverzögerungsdifferenz DIO_DIFF ergibt sich somit der Wert 3. Die Funktion Ausgabepuffererzeugung MAKE_OUTBUF() verwirft daher die Daten für die Zeitspanne DIO_DIFF=3 und beginnt dann Daten für die Zeitspanne T_OUT=3 einzulesen und im Ausgabepuffer OUTBUF bereitzustellen. Zum Zeitpunkt T=90 wird also die Datenausgabe, beginnend mit dem auf die Daten bezogenen Zeitpunkt T=13, gestartet.

In der Figur 8 werden die verworfenen Daten schraffiert dargestellt, die eingelesenen Daten unschraffiert. Die strichlierte Linie stellt den Zeiger auf die momentan auszugebenden Daten dar und wird ebenso wie die Linie für die aktuelle Systemzeit kontinuierlich nach links verschoben. Der mit der strichlierten Linie dargestellte Lesezeiger, welcher auf die Zeitskala DATA bezogen ist, zeigt den Wert 13, während die Systemzeit SYS_TIME() den Wert 90 zeigt.

Nach Aufruf der Ausgabepuffererzeugung MAKE_OUTBUF() wird der aktuelle Zeitstempel TS_ACT auf 16, die aktuelle Ein-/Ausgangsverzögerung DIO_ACT auf 9 gesetzt. Das erste Paket mit dem Zeitstempel TS=10 wird, da die Bedingungen hierfür zutreffen, am Ende der Funktion READ() aus dem Nutzinformationsspeicher PPIM[] gelöscht.

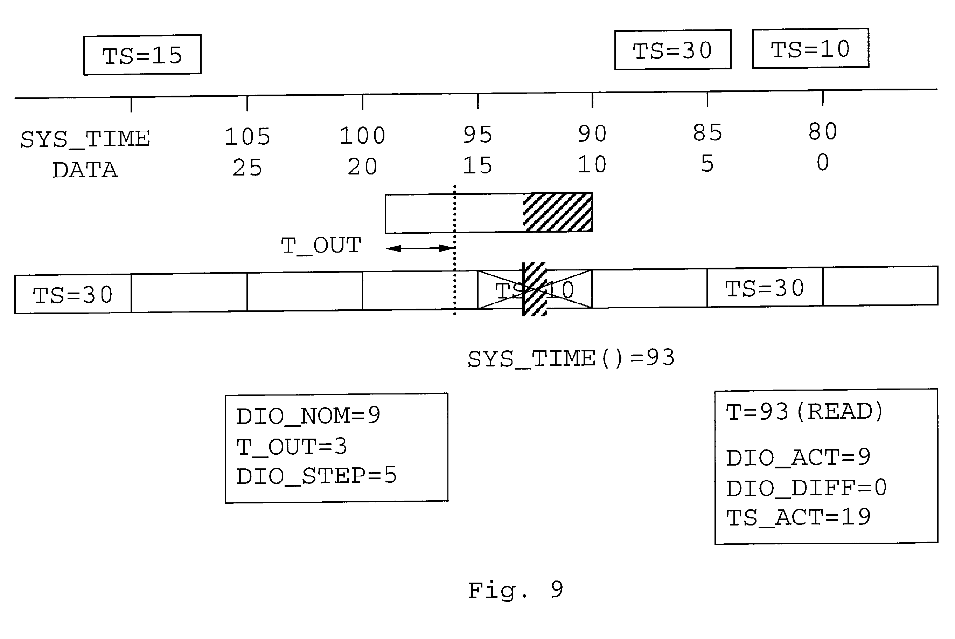

Figur 9 zeigt die erfindungsgemäße Vorrichtung zum Zeitpunkt SYS_TIME()=93. Da das erste Paket mit dem Zeitstempel TS=10 inzwischen gelöscht wurde, wird dieses hier durchgestrichen dargestellt. Zu diesem Zeitpunkt ergibt sich die aktuelle Ein-/Ausgangsverzögerung DIO_ACT zu 9. Die Ein-/Ausgangsverzögerungsdifferenz DIO_DIFF ist somit 0 und es werden mittels der Ausgabepuffererzeugung MAKE_OUTBUF() weitere Daten für die Zeitspanne T_OUT=3 eingelesen und ausgegeben. Der Lesezeiger zeigt zum Zeitpunkt SYS_TIME()=93 auf den Wert T=19.

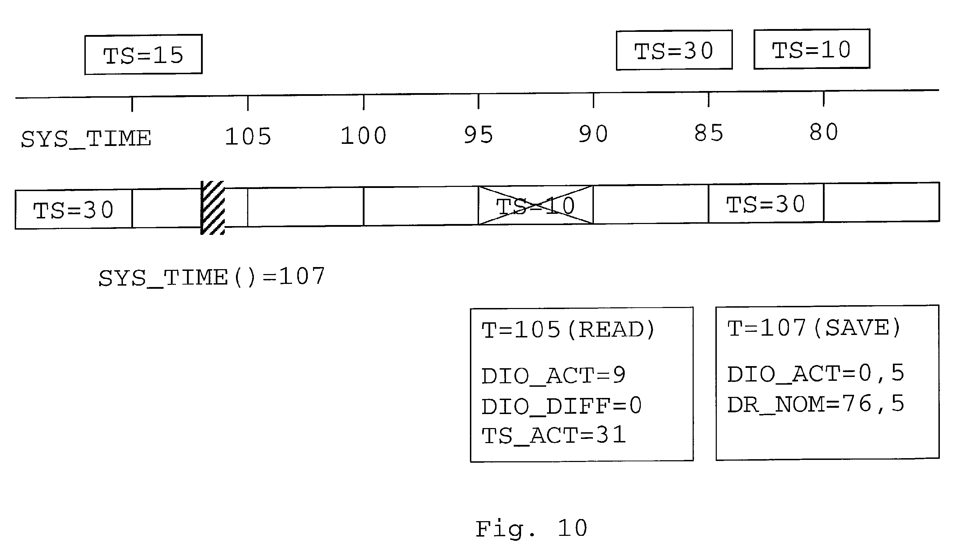

Figur 10 zeigt die Anordnung zum Zeitpunkt SYS_TIME()=107. Unmittelbar davor wurde die Funktion READ() zum Zeitpunkt T=105 zum letzten mal aufgerufen. Die daraus resultierenden Werte sind für T=105(READ) angegeben. Dabei wurde die aktuelle Ein-/Ausgangsverzögerung auf 9, die Ein-/Ausgangsverzögerungsdifferenz auf 0 und der aktuelle Zeitstempel TS_ACT auf 31 gesetzt.

Das zum Zeitpunkt T=107 empfangene dritte Paket mit dem Zeitstempel TS=15 passt aufgrund der in der Funktion SAVE() enthaltenen Bedingungen nicht in den Nutzinformationsspeicher PPIM[] und wird daher verworfen. Nach Ausführung der Funktion SAVE() ergibt sich somit zum Zeitpunkt T=107(SAVE) für die aktuelle Ein-/Ausgangsverzögerung DIO_ACT der Wert 0,5, für die nominelle Empfangsverzögerung DR_NOM der Wert 76,5. Durch das vergleichsweise späte Eintreffen des dritten Pakets wird die nominelle Empfangsverzögerung DR_NOM von 68 auf 76,5 angepasst und dem Umstand Rechnung getragen, dass das dritte Paket aufgrund der fortgeschrittenen Zeit nicht mehr gespeichert und ausgegeben werden kann.

Das in den Figuren dargestellte Ausführungsbeispiel zeigt nur eine Möglichkeit von vielen, Daten nach dem erfindungsgemäßen Verfahren zu übermitteln. Deutlich wird dabei jedoch, dass der Lesezeiger an eine beliebige Stelle des Speichers positioniert werden kann, ohne dabei an die durch die einzelnen Pakete gebildeten Grenzen gebunden zu sein.

## Patentansprüche

1. Verfahren zur Übermittlung von Daten aus einem ersten Datennetz in ein zweites Datennetz, wobei
- die Daten im ersten Datennetz in Pakete gegliedert sind,
- jedes Datenpaket neben den Nutzdaten (PL) eine Information über die im zweiten Datennetz vorgesehene zeitliche Reihenfolge umfasst, insbesondere einen Zeitstempel (TS) und/oder eine laufende Nummer (SN),
- die Datenpakete in einer Speichereinrichtung entsprechend dieser zeitlichen Reihenfolge zwischengespeichert werden,
**dadurch gekennzeichnet,**
- **dass** das Auslesen der zwischengespeicherten Daten an einer vorgebbaren, von der durch die Speicherung von Datenpaketen resultierende Speichersegmentierung unabhängigen Stelle der Speichereinrichtung gestartet wird.

2. Verfahren nach Anspruch 1, **dadurch gekennzeich-net,**
- **dass** Daten zu einem Zeitpunkt, welcher durch Hinzurechnen einer vorgebbaren Verzögerungszeit zum Zeitrang der Daten definiert wird, in das zweite Datennetz übermittelt werden und
- **dass** der Startpunkt für das Auslesen der zwischengespeicherten Daten in der Speichereinrichtung entsprechend dieser Bedingung gewählt wird.

3. Verfahren nach Anspruch 2, **dadurch gekennzeichnet, dass** Daten synthetisch erzeugt werden, wenn der errechnete Zeitpunkt für die Übermittlung der Daten im Bezug auf die aktuelle Systemzeit (SYS_TIME) in der Zukunft liegt und keine Daten mit diesem Zeitrang im Zwischenspeicher vorhanden sind.

4. Verfahren nach einem der Ansprüche 2 bis 3, **dadurch gekennzeichnet,**
- **dass** die Verzögerungszeit verkürzt wird, wenn ein Datenpaket zu spät empfangen wird um zwischengespeichert werden zu können und
- **dass** die Verzögerungszeit verlängert wird, wenn ein Datenpaket zu früh empfangen wird um zwischengespeichert werden zu können.

5. Verfahren nach einem der Ansprüche 1 bis 4, **dadurch gekennzeichnet,**
- **dass** ein Paket einen Zeitstempel (TS) und eine laufende Nummer (SN) umfasst,
- **dass** die Speichereinrichtung mehrteilig aufgebaut ist,
- **dass** die Kopfinformationen der Datenpakete in einem Kopfinformationsspeicher (PHIM) entsprechend der fortlaufenden Nummer (SN) der Datenpakete sortiert gespeichert werden und
- **dass** die Nutzdaten (PL) der Datenpakete in einem Nutzinformationsspeicher (PPIM) entsprechend der Zeitstempel (TS) der Datenpakete sortiert gespeichert werden.

6. Verfahren nach einem der Ansprüche 1 bis 5, **dadurch gekennzeichnet,**
- **dass** eine Maßzahl für den zeitlichen Unterschied zwischen dem Zeitstempel (TS) eines Pakets und der aktuellen Systemzeit (SYS_TIME), zu der dieses Paket manipuliert wird, berechnet wird,
- **dass** ein Synchronisierungsvorgang (SYNC) ausgelöst wird, wenn aufgrund dieser Maßzahl ein vorgebbarer Schwellwert (THR1) überschritten wird und
- **dass** die Speichereinrichtung während des Synchronisierungsvorganges (SYNC) initialisiert wird.

7. Verfahren nach Anspruch 6, **dadurch gekennzeichnet,**
- **dass** als Maßzahl zur Auslösung eines Synchronisierungsvorganges (SYNC) die Differenz zwischen einer durchschnittlichen Empfangsverzögerung (DR_AVG) und einer nominellen Empfangsverzögerung (DR_NOM) vorgesehen wird,
- **dass** eine aktuelle Empfangsverzögerung (DR_ACT) zwischen der Systemzeit (SYS_TIME) zum Empfangszeitpunkt eines eintreffenden neuen Pakets (NP) und dem Zeitstempel dieses neuen Pakets (NP.TS) ermittelt wird und
- **dass** die durchschnittliche Empfangsverzögerung (DR_AVG) über alle so berechneten aktuellen Empfangsverzögerungen (DR_ACT) einer vorgebbaren Anzahl bereits eingetroffener Pakete errechnet wird.

8. Anordnung, welche zur Durchführung des Verfahrens nach einem der Ansprüche 1 bis 7 vorbereitet ist,
**dadurch gekennzeichnet,**
- **dass** die Anordnung ein Eingangsmodul (SAVE) zum Empfang von Daten aus dem ersten Datennetz umfasst,
- **dass** ein Ausgabemodul (READ) zum Senden von Daten in das zweite Datennetz vorhanden ist,
- **dass** die Anordnung ein Synchronisationsmodul (SYNC) umfasst,
- **dass** eine Speichereinrichtung zum Speichern von Datenpaketen entsprechend ihrer zeitlichen Reihenfolge vorhanden ist und
- **dass** die Anordnung Mittel zum Auslesen der zwischengespeicherten Daten an einer vorgebbaren, von der durch die Speicherung von Datenpaketen resultierende Speichersegmentierung unabhängigen Stelle der Speichereinrichtung umfasst.

9. Anordnung nach Anspruch 8, **dadurch gekennzeichnet,**
- **dass** die Anordnung Mittel zur Ausgabe der Daten zu einem Zeitpunkt, welcher durch Hinzurechnen einer vorgebbaren Verzögerungszeit zum Zeitrang der Daten definiert wird, umfasst.

10. Anordnung einem der Ansprüche 8 bis 9, **dadurch gekennzeichnet,**
- **dass** die Speichereinrichtung mehrteilig aufgebaut ist,
- **dass** ein Kopfinformationsspeicher (PHIM) für die Speicherung der Kopfinformationen der Datenpakete entsprechend der fortlaufenden Nummerierung (SN) der Datenpakete vorgesehen ist und
- **dass** ein Nutzinformationsspeicher (PPIM) für die Speicherung der Nutzdaten der Datenpakete entsprechend der Zeitstempel (TS) der Datenpakete vorgesehen ist.
